# EUROPEAN PATENT SPECIFICATION

(11) **EP 2 699 410 B1**
(45) Date of publication and mention of the grant of the patent: **03.10.2018**
(21) Application number: 11776938.0
(22) Date of filing: 06.10.2011
(51) Int. Cl.: B29C 70/60, B32B 5/28, C08J 5/24, C08J 7/04, C08J 5/04

(54) **TARGETED DEPOSITION OF PARTICLES ON SUBSTRATES USED IN THE MANUFACTURE OF COMPOSITE ARTICLES**
GEZIELTE ABLAGERUNG VON TEILCHES AUF SUBSTRATE ZUR VERWENDUNG IN DER HERSTELLUNG VON KOMPOSITEN GEGENSTÄNDEN
DÉPOSITION CIBLÉE DE PARTICULES SUR DES SUBSTRATES POUR LA FABRICATION DES ARTICLES COMPOSITES

(30) Priority: 01.11.2010 US 408911 P
(43) Date of publication of application: 26.02.2014
(73) Proprietor: Cytec Technology Corp., Wilmington, DE 19801 (US)
(72) Inventor: ROGERS, Scott, Alfred, Placentia, CA 92870 (US); ROMAN, Mark, Orange, CA 92869 (US); Dr. Abdel Qader ABUSAFIEH, Abu Dhabi (AE)
(74) Representative: Vande Gucht, Anne
(86) International application number: PCT/US2011/055046
(87) International publication number: WO 2012/060971

(56) References cited:
- EP-A1- 0 707 032
- DE-A1-102005 042 109
- HOJO M ET AL: "Mode I delamination fatigue properties of interlayer-toughened CF/epoxy laminates", COMPOSITES SCIENCE AND TECHNOLOGY, ELSEVIER, UK, vol. 66, no. 5, 1 May 2006 (2006-05-01), pages 665-675, XP025128521, ISSN: 0266-3538, DOI: 10.1016/J.COMPSCITECH.2005.07.038 [retrieved on 2006-05-01]
- ABOT J L ET AL: "Novel carbon nanotube array-reinforced laminated composite materials with higher interlaminar elastic properties", COMPOSITES SCIENCE AND TECHNOLOGY, ELSEVIER, UK, vol. 68, no. 13, 1 October 2008 (2008-10-01), pages 2755-2760, XP025474504, ISSN: 0266-3538, DOI: 10.1016/J.COMPSCITECH.2008.05.023 [retrieved on 2008-06-07]
- IFJU P ET AL: "Residual stress and thermal expansion of graphite epoxy laminates subjected to cryogenic temperatures", COMPOSITES SCIENCE AND TECHNOLOGY, ELSEVIER, UK, vol. 66, no. 14, 1 November 2006 (2006-11-01), pages 2449-2455, XP025128717, ISSN: 0266-3538, DOI: 10.1016/J.COMPSCITECH.2006.02.011 [retrieved on 2006-11-01]
- "Technical Data Sheet: FM(R) 300 Epoxy Film Adhesive", Cytec Industries, Inc. , 9 October 2013 (2013-10-09), Retrieved from the Internet: URL:http://www.argosyinternational.com/sit es/default/files/datasheet/Cytec-FM300-9Oc t2013.pdf [retrieved on 2017-06-30]

## Description

### FIELD OF THE DISCLOSURE

Targeted deposition of particles on substrates used in the manufacture of composite articles.

### BACKGROUND

Prepreg fabrics and fibers are used often in the composite industry to manufacture parts used in the commercial aerospace, military fixed-wing aircraft, civil and military rotorcraft, business and regional jets, and high-performance industrial and automotive industries. "Prepregs" are fibrous reinforcement (sheet, tape, tow, fabric or mat) pre-impregnated with resin and capable of storage for later use. To manufacture a prepreg, a fibrous reinforcement is generally pre-impregnated with a pre-catalyzed resin under heat and pressure or with solvent.

Prepregs may be toughened by the addition of particles to the prepreg. "Toughness" (G_{1C}) is a mechanical property and measures the resistance of a material to the propagation of a crack. In one conventional prepreg application, toughening particles may be physically distributed by a mechanical process onto the fibrous reinforcement (i.e., fabric sheet). The distributed, toughened particles adhere to the surface of the prepreg due to the tack of the resin. When plies of prepregs are stacked together to form a laminate panel, the particles may remain in the interlaminar region of the panel. In the case of particulate toughener, there may be filtering issues in the textile, i.e., the particulate may be washed away or filtered out during part manufacturing.

In another conventional method, particle-toughened prepregs may be manufactured using multi-film impregnation and lamination techniques in order to achieve toughening. The fiber sheet may be impregnated by lamination of first resin films (B films) followed by lamination of particle-filled films (C films) to the fiber sheet. The particle-filled films are typically manufactured by mixing resin with an amount of particles and then coating the mixture onto the release paper to make a film. When laminated to the prepreg, these particle-filled films are designed to continue impregnation and to position the mixed-in particles at the interface of the resultant structure. Document EP 0 707 032 discloses prepregs of fiber-reinforced thermosetting resin that have a coating comprising thermoplastic particles on one or both outer surfaces. Upon lamination of the prepregs into a composite, the layer comprising thermoplastic particles at the surface of the prepreg is formed into a discrete resin layer in the composite at the interface between fiber-reinforced thermosetting resin layers.

At least one limitation associated with this approach is that as the amount of toughening particles increases, the viscosity of the mixture increases. The restrictions on C film viscosity limit the amount of toughening particles which can be added. The particles that are in the resin of the C films can also shift the polymer from a Newtonian fluid into a pseudo-plastic fluid. The high viscosity polymer or high viscosity pseudo-plastic polymer is very difficult to process into low film weights on a reverse roll coater without significant cross-web deflection (due to roll bending) and hence film weight variation. These manufacturing limitations lead to restrictions on the C film weight (typically under 25 grams per square meter) and viscosity. Said differently, the viscosity increases to an unworkable level thereby imposing a ceiling on the amount of toughening particles which can be added.

Another limitation is associated with the total surface area of the added particles. As more particles are added, the total surface area of the particles increases exponentially as a function of the particles average diameter. This result is less resin available to wet-out the fiber bundles of the fabric sheet. Poor wet-out of the prepreg leads to broken, dry filaments on slit prepreg which causes problems in processing.

### SUMMARY

The object of the invention is a method of manufacturing a coated substrate, which method includes: (i) combining a plurality of polymers to achieve a viscosity within a predetermined range to form a resin formulation; (ii) applying the resin formulation to a release film to form a resin film; (iii) combining a first component comprising metal-core insulated carrier particles and second component comprising coating particles wherein the coating particles are electrically attracted to the surface of the carrier particles; and (iv) applying a charge to the resin film wherein coating particles in close proximity thereto are attracted to a surface of the resin film thereby resulting in a coated resin film.

In some embodiments, the particles have a size distribution range of less than 35 microns. In some embodiments, the particles are applied to the substrate in an amount of between 0.5 gsm and 50 gsm. In other embodiments, the particle layer has a coat weight within the range of 2gsm - 35 gsm. The particles may be one of toughening agents, emulsion agents, wetting agents, electrically-conductive agents, fillers, flame retardants, flow-control agents, photo-sensitive agents, pressure-sensitive agents, curing agents, catalysts, inorganic substances or any combination thereof. Materials comprising the particles may be one of a thermoplastic material, a polymer, a rubber, a polyamide, or hybrids thereof or a metallic.

The resin formulation of the resin film may be a combination of epoxies, bis-maleimides, cyanate esters, benzoxazines, polyesters or reactions thereof. The coated resin film may be an intermediate film in a multilayer composite structure and the coating particles may be toughening particles, the combination to combine with a surface of an impregnated fiber bed. The coated resin film may have a weight of between 2 gsm and 100 gsm.

In some embodiments, the particles have a size distribution range of less than 35 microns. In some embodiments, the particles are applied to the substrate in an amount of between 0.5 gsm and 50 gsm. The particles may be one of toughening agents, emulsion agents, wetting agents, electrically-conductive agents, fillers, flame retardants, flow-control agents, photo-sensitive agents, pressure-sensitive agents, curing agents, catalysts, inorganic substances or any combination thereof. Examples of suitable materials for toughening particles include, but are not limited to thermoplastic materials, polymers, rubber, polyamide (i.e., Nylon®), hybrids thereof, metallics (e.g., copper) and combinations thereof. Specific examples of materials for toughening particles include, but are not limited to, a polyimide material (e.g., P84), polyamide, poly(etheretherketone) (PEEK), poly(etherketoneketone) (PEKK), carboxy-terminated butadiene nitrile (CTBN), rubber, an emulsified poly(phenylene oxide) (PPO) material (e.g., EPPO 16), and PILT materials (e.g., PILT 200 or PILT 101). The second resin formulation layer may include a combination of epoxy resins and may have a weight of between 2 gsm and 100 gsm.

### BRIEF DESCRIPTION OF THE DRAWINGS

FIG. 1 illustrates a mechanical deposition process which may be used for the deposition of particles to a substrate but which is not according to the invention.
FIG. 2 illustrates another mechanical deposition process which may be used for the deposition of particles to a substrate but which is not according to the invention.
FIG. 3A illustrates a dual-component electro-static deposition process which may be used for the targeted deposition of particles to a substrate according to embodiments of the present disclosure.
FIG. 3B illustrates an alternative dual-component electro-static deposition apparatus which may be used for the targeted deposition of particles to a substrate according to embodiments of the present disclosure.
FIG. 3C illustrates an alternative dual-component electro-static deposition apparatus which may be used for the targeted deposition of particles to a substrate according to embodiments of the present disclosure.
FIG. 4 illustrates another dual-component electro-static deposition assembly which may be used for the targeted deposition of particles to a substrate according to embodiments of the present disclosure.
FIG. 5 illustrates a manufacturing process which may be used to manufacture prepregs having substrates subjected to targeted deposition combined thereto according to embodiments of the present disclosure.
FIG. 6 illustrates a cross-sectional view of a prepreg having a discrete particle layer in an inter-laminar region according to an embodiment.
FIG. 7A shows a 20 ply [0] panel manufactured using particle-filled films.
FIG. 7B shows a 20 ply [0] panel manufactured using particle-coated films according to an embodiment.

### DETAILED DESCRIPTION

Embodiments of the invention are directed to the targeted deposition of particles below 100 microns onto a substrate such as a film, tape, adhesive, fabric, fibers or a combination thereof. According to the invention, the targeted deposition is accomplished by a dual-component electro-static deposition process. In one embodiment, the substrate having at least one layer of particles thereon may be combined with a prepreg. Prepregs manufactured according to embodiments of the invention may be used to manufacture composites with more robust mechanical and strength characteristics relative to conventional composites manufactured using conventional prepregs in addition to providing improved processed performance during the manufacture of the particle-coated substrate.
In the context of this application, a "substrate" is any medium to which targeted deposition of particles can be applied according to embodiments of the invention. Examples of substrates include, but are not limited to, films, tapes, adhesives, fabrics, fibers or any combination thereof. A "film" is generally a thin, resin film, with or without a carrier and commonly used for adhesion between laminate layers. Examples of films include adhesive films and intermediate films. A "tape" is generally a thin, unidirectional fiber-reinforced prepreg, which may comprise thermoplastic or thermoset resin and unidirectional reinforcing fibers such as carbon fibers. In one embodiment, the tape on which the particles are deposited is a thermoplastic tape. The particles may be deposited on one or both sides of the tape. A "fabric" is generally a planar engineered textile of woven or nonwoven fibers such carbon, fiberglass, ceramic or organic fibers including aramid, para-aramid, nylon, thermoplastic or a combination thereof.

In the context of this application, "coating particles" are any particulate substances such as powders, emulsions, or short-aspect fibers having a diameter of less than 100 microns, more particularly, between about 0.5 microns and 100 microns, and which may be applied to a substrate by a targeted deposition process. The particles may include, but are not limited to, toughening agents, emulsion agents, wetting agents, electrically-conductive agents, fillers, flame retardants, flow-control agents, photo-sensitive agents, pressure-sensitive agents, curing agents, catalysts, inorganic substances or any combination thereof. Materials comprising the substances may generally include, but are not limited to, thermoplastic materials, polymers, rubber, polyamide, or hybrids thereof and metallics (such as copper).

Examples of catalysts include, but are not limited to, tri-phenyl phosphine (TTP), boron tri-fluoride (BF3), imidizole, substituted urea (a curing agent) and Intelimer® encapsulated catalysts. Examples of curing agents include, but are not limited to, 4,4'-diamino diphenyl sulfone (DDS), 3,3' DDS, diuron, monuron, phenuron, dicyandiamide (DICY) and fluorinated curing agents. Examples of inorganic substances include, but are not limited to, pigments such as titanium dioxide and flame retardants such as antimony tri-oxide or intumescent materials (e.g., ammonium polyphosphate). Other substances include, but are not limited to, base resin components such as BMI-H (MDA Bismaleimide manufactured by KHI- Kawasaki Heavy Industries), solid epoxies, nano particles or fibers and pressure-sensitive and self-healing materials for tack enhancement or bond promotion. It should be appreciated that any of these substances may be applied singly or in combination, such as in a series.

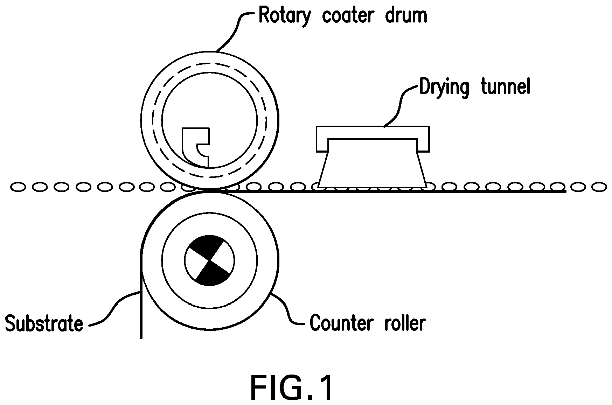

FIG. 1 illustrates a mechanical deposition process which may be used for the deposition of particles to a substrate but which is not according to the invention. The process illustrated is commonly known as a paste-dot process. In a paste-dot process, thermo fusible pastes are applied directly onto the substrate with a rotary coater drum. The paste is pumped into a rotary screen and applied with a squeegee to the substrate. The treated substrate is then led through a drying tunnel to remove the water and any other volatile products.

A specific example of a representative paste-dot process is rotary screen printing. In the rotary screen printing process, an aqueous suspension of finely divided thermoplastic powder adhesives and additives (the paste) is pressed through the holes of a rotating, perforated cylinder (the screen stencil) onto a cold web of fabric. The aqueous adhesive dispersion is pumped through a hollow blade into the interior of the rotating screen stencil. The internal adjustable blade presses the paste through the holes of the stencil and onto the web of fabric, which runs over a counter roller coated with hard or soft rubber. The paste dots are then dried and either circulating air or infrared radiations may be used to sinter the textile web.

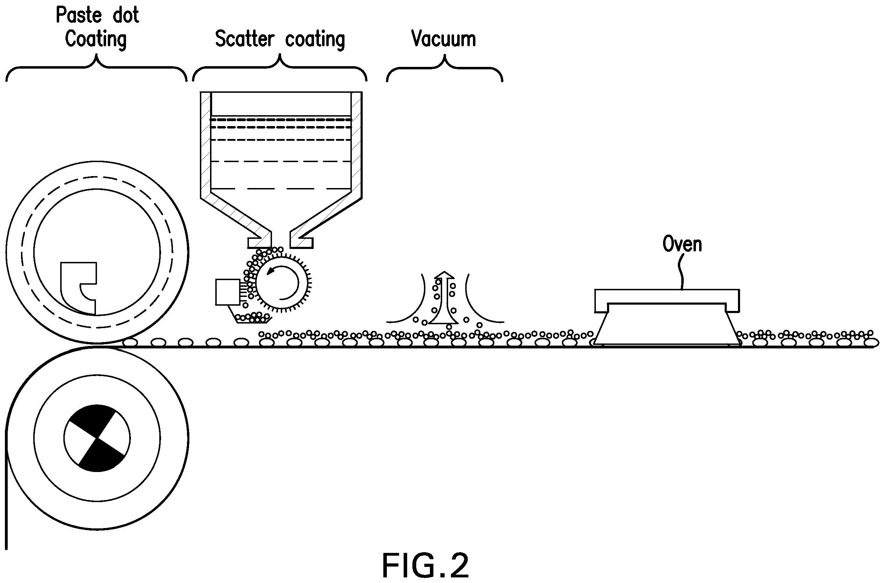

FIG. 2 illustrates another mechanical deposition process which may be used for the deposition of particles to a substrate but which is not according to the invention. The process illustrated is commonly known as a double dot coating process. Double dot coating is essentially paste dot coating followed by scatter coating. The scatter coating powder (known as top dot) will adhere to the paste dot (known as base dot) and any powder that is still between the paste dots will be absorbed by a vacuum suction. Both layers are then subjected to a hybrid oven that will combine both coatings in one double dot coating. Both of these processes use a slurry (paste) and typically cannot achieve uniform coat surfaces with particulates below 150 microns.

Dual-component electro-static deposition is a coating process which uses a two-component system to deposit particles onto a surface. One component of the two-component system generally includes metal-core insulated carrier particles while the other component generally includes the particles to be deposited onto the surface (hereinafter, the "coating particles"). When the components are mixed together, the insulation layer of the carrier particles attracts the coating particles through tribological charge. Generally, multiple coating particles reversibly attach to the surface of a carrier particle. The number of coating particles which attach to the surface of the carrier particle is a function of the chemical nature of the coating particles and the insulation layer of the carrier particle, the tribological charge between the coating particles and the carrier particle, and the relative sizes of the carrier and coating particles in addition to other factors.

The coating particles of the two-component system may be applied to a surface by one or more drums in close proximity to the surface to be coated. Generally, the carrier particles are magnetically attracted to the developer drum. The drum rotates until the powder is moved from the developer reservoir to the transfer location on the deposition surface. At the transfer location, an electric potential is applied to the surface to cause the transfer of the coating particles to the surface.

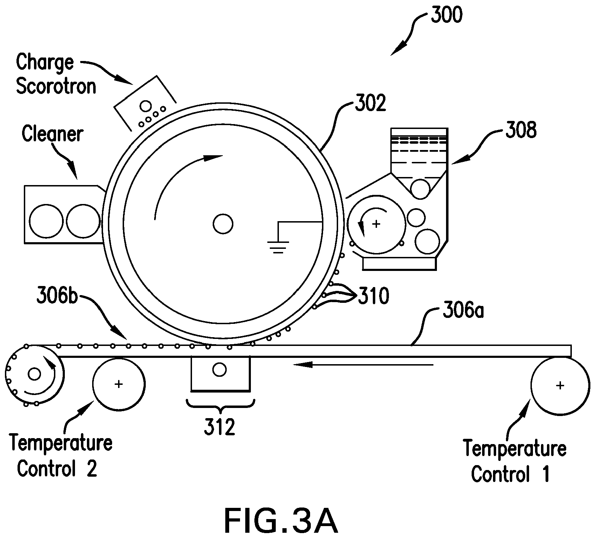

FIG. 3A illustrates a dual-component electro-static deposition apparatus which may be used for the targeted deposition of particles to a substrate according to embodiments of the invention. In one embodiment, a dual-component electro-static deposition assembly 300 includes an axially rotating drum 302 in close proximity to a moving substrate 306a.

A reservoir 308 in close proximity to rotating drum 302 may house a two-component system of carrier and coating particles. As the drum 302 rotates, the coating particles 310 are magnetically attracted to the drum 302. As the surface of the drum 302 having the coating particles adhered thereto approaches a transfer location 312, an electrical potential is applied to the substrate 306a at the transfer location 312. The coating particles are then substantially or completely uniformly deposited onto the substrate 306a resulting in a coated substrate 306b. The coated substrate 306b may be wound up downstream for later application.

In some embodiments, one or more components of the assembly 300 may be temperature controlled. For example, in one embodiment, the reservoir 308 may be temperature controlled to allow uniform tribological charge of the coating particles. In another embodiment, the substrate 306a may be temperature controlled by a temperature-control apparatus at one or more locations adjacent the moving substrate 306a. The substrate 306a may be temperature controlled at an upstream location (i.e., before coating), at a downstream location (i.e., after coating), or a combination of both, by using suitable temperature-controlling mechanisms, for example, temperature-controlled rollers. For example, in this case of a tack enhancement resin film, the substrate 306a may be cooled to remove tack from the resin to allow contact between the drum 302 and the substrate 306a and may be heated to allow the substrate 306a to wet the particle coating. It is anticipated that heating a substrate comprised of a thermoplastic material would permit particle coating thereon which otherwise may not be able to be achieved. Finally, in the case of a tack enhancement resin film, the coated substrate 306b may be wound downstream in either a clockwise or counter-clockwise direction. It is anticipated that clockwise wind-up may assist particle-to-film adhesion.

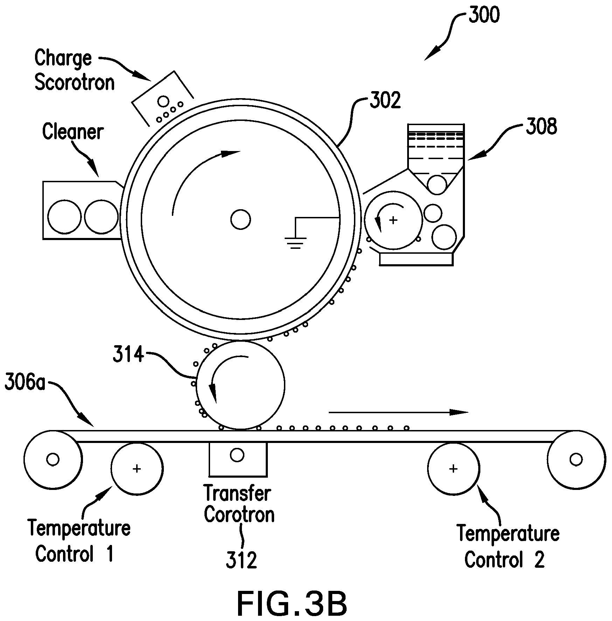

FIG. 3B illustrates an alternative dual-component electro-static deposition apparatus which may be used for the targeted deposition of particles to a substrate according to embodiments of the present disclosure. The dual-component electro-static deposition assembly 300 illustrated in FIG. 3B includes all or substantially all of the components as those described with respect to FIG. 3A; however, according to this embodiment, a transfer roller 314 is located between the drum 302 and moving substrate 306a. The transfer roller 314 may operate in an opposite direction relative to drum 302 and functions to transfer the particle coating to the substrate 306a.

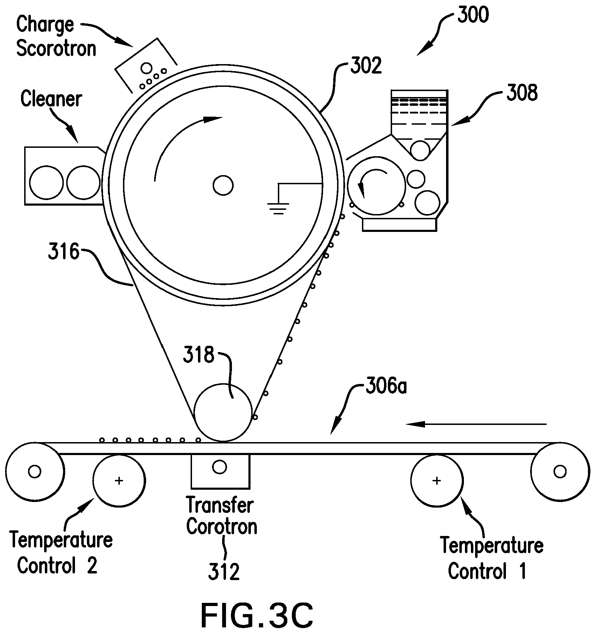

FIG. 3C illustrates an alternative dual-component electro-static deposition apparatus which may be used for the targeted deposition of particles to a substrate according to embodiments of the invention. The dual-component electro-static deposition assembly 300 illustrated in FIG. 3C includes all or substantially all of the components as those described with respect to FIG. 3A; however, according to this embodiment, a photoreceptor belt 316 is positioned about the drum 302 and a secondary drum 318. The photoreceptor belt 316 functions to transfer the particle coating to the substrate 306a.

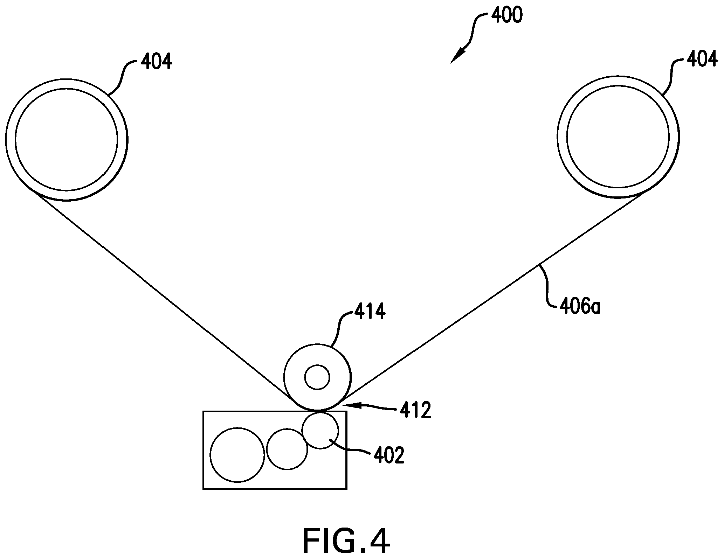

FIG. 4 illustrates another dual-component electro-static deposition assembly which may be used for the targeted deposition of particles to a substrate according to embodiments of the invention. In this embodiment, a dual-component electro-static deposition assembly 400 includes an axially rotating drum 402 (not shown) in close proximity to a moving substrate 406a suspended by two opposing spools 404. According to this embodiment, the rotating drum 402 is positioned underneath the moving substrate 406a. A guiding cylinder 414 may be positioned on top of the moveable substrate 406a such that the moveable substrate 406a is guided between the guiding cylinder 414 and a transfer area 412 adjacent to the rotating drum 402. A reservoir (not shown) in close proximity to rotating drum 402 may house a two-component system of carrier and coating particles (not shown). As the drum 402 rotates, the coating particles are magnetically attracted to the drum 402. As the surface of the drum 402 having the coating particles adhered thereto approaches the transfer area 412, an electrical potential is applied to the moveable substrate 406a at the transfer area 412. The coating particles are then substantially or completely uniformly deposited onto the substrate 406a resulting in a coated substrate 406b. The coated substrate 406b may be wound up on the opposing spool 404.

According to embodiments of the invention, a dual-component electro-static deposition process such as those previously described may be used to deposit a substantially or completely uniform layer of coating particles onto a substrate, i.e., targeted deposition. In one embodiment, the particles are toughening particles and the substrate is a film to be combined with a prepreg. For toughening particles, the coating particles may be less than 100 microns, preferably less than 50 microns. In some embodiments, the coating particles may have a size distribution range from approximately 3 to 35 microns. The anticipated mass deposition of the particles may be in the range of 0.5 to 50 grams per square meter (gsm) +/- 10%, with the specific setpoint value depending upon the material set, in some embodiments, greater than 34 gsm. It should be appreciated that these ranges and values vary with the nature of the coating particles and other factors, i.e., catalysts may have a narrower range, flame retardants may have a broader range, etc.

In one embodiment, the substrate to be subjected to targeted deposition by a dual-component electro-static deposition process is a tack enhancement resin film. The tack enhancement resin film may generally comprise one or more un-catalyzed polymers providing a tack-enhancement feature and increased out-life of the resultant composite article among other performance-enhancing characteristics. The resin film is generally coated on a peel-away release sheet which is necessary for handling and particle coating. The resin should have a viscosity suitable for an intended application, for example, between0.01 Pa.s (10 centipoise (cps)) and 500 Pa.s (500 kcps).

The tack enhancement resin film may be coated with a layer of toughening particles by a dual-component electro-static deposition process to increase matrix toughness and impact characteristics of the resultant composite structure comprised of a plurality of prepregs incorporating at least one coated tack enhancement resin film. Examples of suitable resins include, but are not limited to, epoxies, polyester, bismaleimide (BMI), cyanate ester, phenolic, benzoxazine, and solvent versions thereof. Specific examples of resins include, but are not limited to, Cycom®5312 and 826 TE tack enhancement resins. Generally, when applying a particle whose purpose is toughening should have one or more of the following characteristics: the toughening particles do not melt during processing, i.e., at a coating temperature; the toughening particles do not substantially flow once attached to the substrate; and the toughening particles generally wet out during subsequent processing (lamination/autoclaving). Examples of suitable materials for toughening particles are discussed above.

More specifically, a resin may be applied to a peel-away release sheet in an amount of between approximately 2 gsm and 100 gsm, in one embodiment, between approximately 12 gsm and 22 gsm, to form a tack enhancement resin film (i.e., the film substrate). Generally, the film weight should be between these weights to minimize the amount of liquid resin removed from the main mix while still allowing a controlled tack on the surface of the resultant prepreg. If most of the liquid resin in the formulation is used in the tack enhancement film (second layer), this causes the underlying film (first layer) viscosity to be high which makes the task of impregnating the fiber bed more difficult and can impact the drape of the product.

The film substrate may then be positioned on a dual-component electro-static deposition assembly and coating particles may be applied thereto as previously described (i.e., by the two-component system). Parameters of the dual-component electro-static deposition assembly which affect the coating (thickness, uniformity) include, but are not limited to, developer voltage settings, line speed and tribological charge differential between the carrier particles, coating particles and developer drum. Parameters of the coating particles which affect the coating (thickness, uniformity) include, but are not limited to, chemical nature of the coating particles, weight distribution of the coating particles and particle size distribution of the coating particles.

Generally, the coating particles are applied to the film substrate as a percentage of the overall resin system of the resultant prepreg. For example, in a prepreg with a total resin content of 35%, the particle content may be from about 0.1% to 75% by weight. Expressed differently, the coating particles may be applied to the film substrate in an amount of between approximately 0.5 gsm and 50 gsm depending on the specific application (i.e. unitape, etc.).

According to embodiments of the invention, the resultant coated film substrate may combine with one or more other substrates such as a prepreg or any other suitable substrate to provide an advantage provided by the coating particles (i.e., toughening from toughening particles, flame resistance from flame retardant particles, etc.).

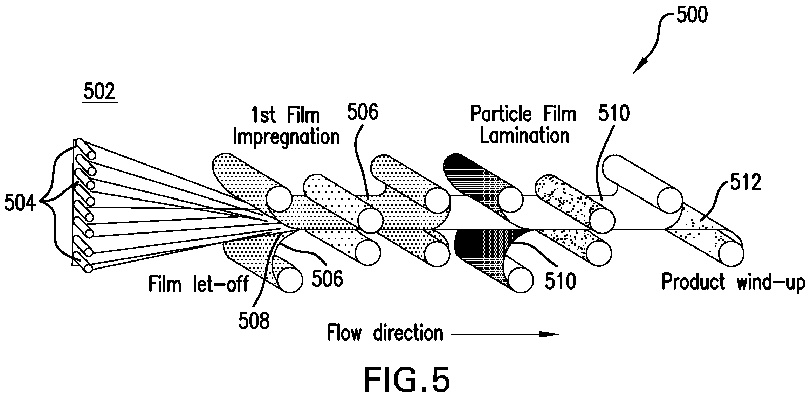

FIG. 5 illustrates a manufacturing process which may be used to manufacture prepregs having substrates subjected to targeted deposition combined thereto according to an embodiment. In this embodiment, fibers 502 from a plurality of spools 504 may be combined with first films 506 having a first viscosity on either side of the fiber bed 508 by a hot-melt lamination process at a temperature of between about 37 °C to 200 °C for, e.g., thermosets, and between about 240 °C to 395 °C for e.g., thermoplastics. First films 506 are designed to impregnate the fiber bed 508. Release papers are removed after the lamination. Second films 510 having a second viscosity are then combined on either side of the fiber bed 508 by warm-melt lamination at a temperature of between about 25 °C to 180 °C for, e.g., thermosets, and between about 200 °C to 380 °C for e.g., thermoplastics. Each second film 510 may be a substrate with a discrete layer of particles thereon manufactured by a dual-component electro-static deposition process such as those previously described. In this embodiment, second films 510 are designed to provide toughening of the resultant prepreg 512 in a defined inter-laminar region. Either the top or bottom release paper is removed (depending on the direction of wind-up) the after the lamination. Prepreg 512 may then be slit and wound-up.

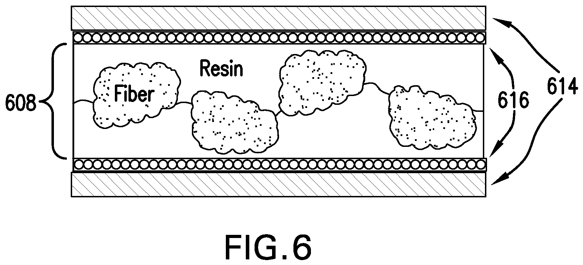

FIG. 6 illustrates a cross-sectional view of a prepreg having a discrete particle layer in an inter-laminar region according to an embodiment. The prepreg may be a result of the manufacturing process described with reference to FIGS. 3-5. According to this embodiment, a fiber bed 608 has been impregnated by hot-melt lamination of resin impregnation films (not shown) followed by warm-melt lamination of a tack enhancement resin film 614 having a discrete layer of toughening particles 616 deposited thereon by a dual-component electro-static deposition process as previously described.

According to some embodiments, the particles are inert (i.e. not fusible) when deposited onto an intermediate resin film (polymer film or tack film) before lamination onto the prepreg. After lamination, the particles are in close chemical contact with the polymer chains of the tack film; however, there is no chemical reaction even if a catalyst is incorporated therein. This allows the film resin chemistry to be optimized separately from the prepreg resin chemistry. Generally, the particles lack sufficient strength to adhere to the prepreg substrate for handling without the polymer film. Thus, the polymer provides an attachment mechanism to attach or integrate the articles to the prepreg substrate.

Plies of impregnated fibrous reinforcement sheets (prepregs), especially those made according to embodiments of the present disclosure, can be laminated together to form a composite article by heat and pressure, for example by autoclave, vacuum or compression molding or by heated rollers, at a temperature above the curing temperature of the thermosetting resin or, if curing has already taken place, above the glass transition temperature of the mixture, typically at least 60 °C to about 230 °C, and at a pressure in particular in excess of 0.8 bar, preferably in the range of 1 and 10 bar.

The resulting multi-ply laminate may be anisotropic in which the fibers are continuous and unidirectional, orientated essentially parallel to one another, or quasi-isotropic in each ply of which the fibers are orientated at an angle, conventionally 45° as in most quasi-isotropic laminates but possibly for example 30° or 60° or 90° or intermediately, to those in the plies above and below. Orientations intermediate between anisotropic and quasi-isotropic, and combination laminates, may be used. Suitable laminates contain at least 4 preferably at least 8, plies. The number of plies is dependent on the application for the laminate, for example the strength required, and laminates containing 32 or even more, for example several hundred, plies may be desirable. Woven fibers are an example of quasi-isotropic or intermediate between anisotropic and quasi-isotropic.

Substrates having toughening particles coated thereon according to embodiments of the present disclosure were experimentally found to have numerous advantages over conventional substrates having toughening particles mixed therein. For example, in the case of a tack enhancement film, since the toughening particles are coated onto the film rather than mixed in, the viscosity of the resin comprising the film is not affected by the addition of toughening particles during the mixing process used to create the film. As a result, a larger quantity of toughening particles may be combined with the film by coating than would otherwise be feasible by mixing. Additionally, because the viscosity of the resin is kept within an appropriate range, processing the film is greatly enhanced.

For example, experimental testing showed that particle-filled tack enhancement resin films had an average viscosity of about 0.915 Pa.s (915 Poise) while tack enhancement resin films with no particles had an average viscosity of about 0.315 Pa.s (315 Poise). The tack enhancement resin film with no particles represents the particle-coated films according to embodiments of the present disclosure because there is none or substantially no particles within those films. That is, the particle coating provides a discrete layer on the film and, therefore, the viscosity of the underlying resin substrate is not or is minimally affected. Thus, particle-coated films manufactured according to embodiments of the present disclosure have approximately one-third the viscosity as conventional particle-filled films.

Moreover, since the toughening particles are in a discrete layer on one side of the film, the film resin chemistry may be optimized separately from the prepreg resin chemistry. In conventional films in which the toughening particles are mixed in with the resin, a percentage of the particles tend to flow into the prepreg resin when laminated to the impregnated fiber bed (prepreg). This has mechanical and chemical affects on the resin in the prepreg in which case the impregnation resin of the prepreg cannot be optimized separate from the resin in the film. On the other hand, the film according to embodiments of the present disclosure has a discrete layer of toughening particles allowing for optimization of the film resin to be performed separately from the resin in the impregnated fiber bed (prepreg). For example, if the viscosity of the prepreg resin is kept high by keeping the product temperature lower than its flow temperature, it is anticipated that the toughening particles will show minimal mixing with the prepreg resin when subjected to low temperature lamination.

### Example 1

An experiment was conducted to compare the characteristics of prepregs manufactured according to embodiments of the present disclosure (particle-coated tack enhancement resin film) with conventionally manufactured prepregs (particle-filled tack enhancement resin film). For each type of film, a four-film lamination process was used.

*Impregnation films (first films).* The films used to impregnate the fiber bed were the same for each embodiment and prepared according to the following formulation:

**Table 1**

| Resin formulation | Total Prepreg | 60% Film (B) (24-26 gsm) | 40% Film (C) (16 gsm/side) |
|---|---|---|---|
| *INGREDIENTS* | % | % | % |
| Blend of diglycidyl ether bisphenol F (DGEBF) and diglycidyl ether bisphenol A (DGEBA) | 58.8 | 63.1 | 52.7 |
| Toughener 1 - Polyether sulfone (PES) | 14.3 | 15.3 | 12.8 |
| Toughener 2 (particles) - Polyimide | 6.5 | 0 | 16.3 (2.6gsm/side) |
| Curing agent - 4,4'-diamino diphenyl sulfone (DDS) | 20.3 | 21.7 | 18.2 |
| **Total** | **100** | **100** | **83.7** |

*Particle-filled films (second films).* The particle-filled films used for toughening the impregnated fiber bed (prepreg) were prepared according to the following formulation:

**Table 2**

| Resin formulation | C-Film (particle-filled) | |
|---|---|---|
| | GSM % | 16 grams |
| Blend of diglycidyl ether bisphenol F (DGEBF) and diglycidyl ether bisphenol A (DGEBA) | 50% | 8.43 |
| Toughener 1 - Polyether sulfone (PES) | 13% | 2.05 |
| Toughener 2 (particles) - Polyimide | 16% | 2.61 |
| Curing agent - 4,4'-diamino diphenyl sulfone (DDS) | 18% | 2.91 |
| **Total** | **100.0%** | **16.0** |

*Particle-coated films (second films).* The film substrate used for targeted deposition of the toughening particles (also used for toughening the impregnated fiber bed (prepreg)) were prepared according to the following formulation:

**Table 3**

| Resin formulation | C-Film (no particles) | |
|---|---|---|
| | GSM % | 13.4 grams |
| Blend of diglycidyl ether bisphenol F (DGEBF) and diglycidyl ether bisphenol A (DGEBA) | 50% | 8.43 |
| Toughener 1 - Polyether sulfone (PES) | 13% | 2.05 |
| Toughener 2 - Polyimide | 0 | 2.61 |
| Curing agent - 4,4'-diamino diphenyl sulfone (DDS) | 18% | 2.91 (coated) |
| **Total** | **100.0%** | **13.4** |

Second films (both particle-filled and particle-coated; C films) were coated on differential release coated Mylar films at a target of 13 gsm. The mylar films were used to reduce the dielectric effect of moisture within the release paper.

To manufacture the particle-coated film, the second films were subjected to targeted deposition by an dual-component electro-static deposition process such as those previously described. The particle deposition films were wound without poly separator to prevent the powder from transferring to the poly. The target weight for particle loading was between 2.3 and 2.8 gsm to mimic the base formulation. The particle loadings were calculated assuming an average weight of film. The following results were obtained:

**Table 4**

| Prepreg average particle loading both sides of prepreg | |
|---|---|
| | Average (gsm) |
| Particle-coated | 5.575 gsm |
| Particle-filled | 2.6 gsm |
| Difference | 2.975 gsm |

As shown in the comparison data, the deposited particle loading was substantially above the desired target of between 2.3 gsm and 2.8 gsm. This evidences the feasibility of higher loading at the inter-laminar region of the resultant composite than would be possible using a mixed-in particle approach. That is, a particle-mixed film having this quantity of particles renders the viscosity too high and therefore, unworkable, i.e., it may not be able to be subsequently coated or prepregged. It is anticipated that particle deposition of films (particle-coated) provides higher surface loadings than are practical in a four film process using particle-filled films.

*Mechanical performance.* Mechanical testing was conducted on 16-ply composite laminates incorporating prepregs manufactured according to compare the performance of these two manufacturing methods. The test values reported are the average of three tests and have a calculated standard deviation of the test:

**Table 5**

| | **Particle-filled prepreg** | **Particle-coated prepreg** | Difference |
|---|---|---|---|
| **SBS** | | | |
| Stress in Mpa (ksi) | 113.76 (16.5) | 113.76 (16.5) | 0.000 |
| stdev | 4.1 (0.6) | 2.8 (0.40) | |
| | | | |

| **Tension (90 degree-nom.)** | | | |
|---|---|---|---|
| Strgth in MPa (ksi) | 97.59 (14.155) | 88.94 (12.9) | - 8.65 (-1.255) |
| stdev | 1.8 (0.265) | 4.8 (0.70) | |
| Mod in GPa (msi) | 8.61 (1.25) | 8.96 (1.3) | 0.06 (0.010) |
| stdev | 0.07 (0.01) | 0.14 (0.02) | |
| | | | |

| **Open Hole Compression** | | | |
|---|---|---|---|
| 250 water boil-Normalized Strgth in MPa (ksi) | 220.63 (32) | 215.80 (31.3) | -4.82 (-0.700) |
| stdev | 3.4 (0.5) | 2.8 (0.4) | |
| 250 water boil-Normalized Modulus in MPa (ksi) | 54.46 (7.9) | 53.08 (7.7) | -1.37 (-0.200) |
| stdev | 0.7 (0.1) | 0.7 (0.1) | |
| | | | |

| **End Notch Flex** | | | |
|---|---|---|---|
| G_{IIC} | 11.224 | 11.027 | -0.197 |
| stdev | 0.265 | 0.186 | |
| | | | |

| **In plane Shear (RT MEK soak)** | | | |
|---|---|---|---|
| Shear Modulus | 0.554 | 0.57 | 0.018 |
| stdev | 0.02 | 0.003 | |
| | | | |
| **CAI** in MPa (ksi) | 251.65 (36.5) | 285.44 (41.4) | 33.78 (4.900) |
| stdev | 4.1 (0.6) | 9.0 (1.30) | |

| **Damage area** | | | |
|---|---|---|---|
| -3dB | 1.2533 | 1.08 | -0.174 |
| stdev | 0.0201 | 0.10 | |
| -6dB | 1.1403 | 0.96 | -0.180 |
| stdev | 0.0268 | 0.07 | |
| -18dB | 0.9621 | 0.792 | -0.170 |
| stdev | 0.0114 | 0.07760 | |

Compression After Impact, or CAI, is a measurement of the damage resistance/tolerance of a laminate. Damage resistance measures the integrity of the laminate when it experiences a drop-weight impact event while damage tolerance measures the integrity of the laminate after being subjected to a quasi-static indentation event. Generally, the higher the CAI value, the more the laminate is damage resistant/tolerant.

Mode II delamination resistance, also known as the forward shear delamination resistance (G_{IIC}) is generally measured using the end notch flexure (ENF) specimen. The specimen is manufactured with a crack starter and the test consists of a three point-bending load. Unstable crack growth is generated when the maximum load is applied to an ENF specimen.

The particle-coated prepreg showed higher performance on CAI and a reduced impact damage area while exhibiting a lower ENF. The difference in CAI was unexpectedly greater than anticipated and is theorized to be a result of the higher particle loading delivered in the particle deposition testing. The impact on ENF was opposite that which was expected given a higher CAI value.

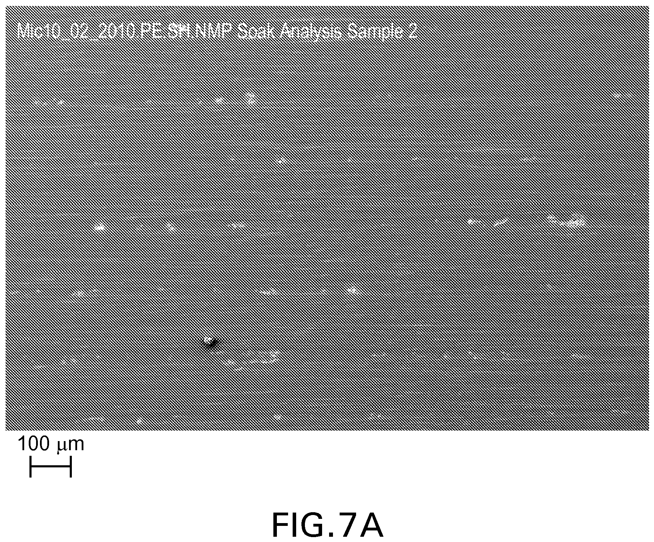

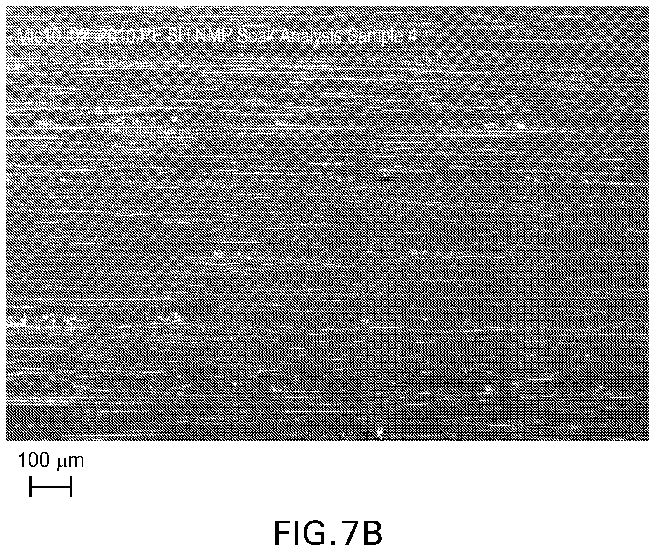

FIG. 7A shows a 20 ply [0] panel manufactured using particle-filled films. The particles are not uniformly distributed but rather randomly positioned. FIG. 7B shows a 20 ply [0] panel manufactured using particle-coated films according to embodiments of the present disclosure. The panel exhibited similar mechanical improvements as previously discussed.

## Claims

1. A method of manufacturing a coated substrate, comprising:
combining a plurality of polymers to achieve a viscosity within a predetermined range to form a resin formulation;
applying the resin formulation to a release film to form a resin film;
combining a first component comprising metal-core insulated carrier particles and second component comprising coating particles wherein the coating particles are electrically attracted to the surface of the carrier particles; and
applying a charge to the resin film wherein coating particles in close proximity thereto are attracted to a surface of the resin film thereby resulting in a coated resin film.

2. The method of manufacturing the coated substrate of claim 1, further comprising, controlling a temperature of the resin film to be within a predetermined temperature range at least one location along the resin film during manufacture.

3. The method of manufacturing the coated substrate of claim 1 wherein the coating particles have a size distribution range of less than 35 microns.

4. The method of manufacturing the coated substrate of claim 1 wherein the coating particles are applied to the substrate in an amount of between 0.5 gsm and 50 gsm.

5. The method of manufacturing the coated substrate of claim 1 wherein the coating particles are one of toughening agents, emulsion agents, wetting agents, electrically-conductive agents, fillers, flame retardants, flow-control agents, photo-sensitive agents, pressure-sensitive agents, curing agents, catalysts, inorganic substances or any combination thereof.

6. The method of manufacturing a coated substrate of claim 1 wherein the particles are made of a material selected from a thermoplastic material, a polymer, a rubber, a polyamide, or hybrids thereof or a metallic.

7. The method of manufacturing the coated substrate of claim 1 wherein the resin formulation comprises epoxies, bis-maleimides, cynate esters, benzoxazines, polyesters or reactions thereof.

8. The method of manufacturing the coated substrate of claim 1 wherein the toughening particles are made of a material selected from the group consisting of polyimide, polyamide, poly(etheretherketone) (PEEK), poly(etherketoneketone) (PEKK), carboxy-terminated butadiene nitrile (CTBN), rubber, an emulsified poly(phenylene oxide) (PPO) material, functionalized thermoplastic polymers, and mixture of thermoset and thermoplastic materials.

9. The method of manufacturing a coated substrate of claim 1 wherein the coated resin film has a weight within the range of 2 gsm-100 gsm and the particle layer has a weight within the range of 2 gsm-35 gsm.

## Patentansprüche

1. Verfahren zur Herstellung eines beschichteten Substrats, das Folgendes umfasst:
Vereinigen von mehreren Polymeren zur Erzielung einer Viskosität innerhalb eines vorbestimmten Bereichs zur Bildung einer Harzformulierung;
Aufbringen der Harzformulierung auf eine Trennfolie zur Bildung eines Harzfilms;
Vereinigen einer ersten Komponente, die isolierte Trägerteilchen mit Metallkern umfasst, und einer zweiten Komponente, die Beschichtungsteilchen umfasst, wobei die Beschichtungsteilchen elektrisch von einer Oberfläche des Harzfilms angezogen werden; und
Anlegen einer Ladung an den Harzfilm, wobei Beschichtungsteilchen in unmittelbarer Nähe dazu von einer Oberfläche des Harzfilms angezogen werden, so dass sich ein beschichteter Harzfilm ergibt.

2. Verfahren zur Herstellung des beschichteten Substrats nach Anspruch 1, ferner umfassend das Einstellen einer Temperatur das Harzfilms innerhalb eines vorbestimmten Temperaturbereichs an mindestens einer Stelle entlang des Harzfilms während der Herstellung.

3. Verfahren zur Herstellung des beschichteten Substrats nach Anspruch 1, wobei die Beschichtungsteilchen einen Größenverteilungs bereich von weniger als 35 Mikron aufweisen.

4. Verfahren zur Herstellung des beschichteten Substrats nach Anspruch 1, wobei die Beschichtungsteilchen in einer Menge zwischen 0,5 g/m² und 50 g/m² auf das Substrat aufgebracht werden.

5. Verfahren zur Herstellung des beschichteten Substrats nach Anspruch 1, wobei es sich bei dem Beschichtungsteilchen um Zähigkeitsvermittler, Emulgatoren, Netzmittel, elektrisch leitfähigen Mittel, Füllstoffe, Flammschutzmittel, Verlaufsmittel, lichtempfindliche Mittel, druckempfindliche Mittel, Härtungsmittel, Katalysatoren, anorganische Substanzen oder eine beliebige Kombination davon handelt.

6. Verfahren zur Herstellung eines beschichteten Substrats nach Anspruch 1, wobei die Teilchen aus einem Material bestehen, das aus einem thermoplastischen Material, einem Polymer, einem Kautschuk, einem Polyamid oder Hybriden davon oder einem Metall ausgewählt ist.

7. Verfahren zur Herstellung des beschichteten Substrats nach Anspruch 1, wobei die Harzformulierung Epoxidharze, Bismaleinimide, Cyanatester, Benzoxazine, Polyester oder Reaktionen davon umfasst.

8. Verfahren zur Herstellung des beschichteten Substrats nach Anspruch 1, wobei die zähigkeitsvermittelnden Teilchen aus einem Material aus der Gruppe bestehend aus Polyimid, Polyamid, Poly(etheretherketon) (PEEK), Poly(etherketonketon) (PEKK), carboxyterminiertem Butadiennitril (CTBN), Kautschuk, einem emulgierten Poly(phenylenoxid)(PPO)-Material, funktionalisierten thermoplastischen Polymeren und Mischungen von duroplastischen und thermoplastischen Materialien bestehen.

9. Verfahren zur Herstellung eines beschichteten Substrats nach Anspruch 1, wobei der beschichteter Harzfilm ein Gewicht im Bereich von 2 g/m²-100 g/m² aufweist und die Teilchenschicht ein Gewicht im Bereich von 2 g/m²-35 g/m² aufweist.

## Revendications

1. Procédé de fabrication d'un substrat revêtu, comprenant :
la combinaison d'une pluralité de polymères pour atteindre une viscosité à l'intérieur d'une gamme prédéterminée pour former une formulation de résine ;
l'application de la formulation de résine à un film détachable pour former un film de résine ;
la combinaison d'un premier composant comprenant des particules de support isolées à coeur métallique et un deuxième composant comprenant des particules de revêtement, les particules de revêtement étant attirées électriquement vers la surface des particules de support ; et
l'application d'une charge au film de résine, les particules de revêtement à proximité étroite de celui-ci étant attirées vers une surface du film de résine, se soldant ainsi par un film de résine revêtu.

2. Procédé de fabrication du substrat revêtu de la revendication 1, comprenant en outre la régulation d'une température du film de résine pour qu'elle soit à l'intérieur d'une gamme de température prédéterminée à au moins un emplacement le long du film de résine pendant la fabrication.

3. Procédé de fabrication du substrat revêtu de la revendication 1 dans lequel les particules de revêtement ont une gamme de distribution de taille de moins de 35 micromètres.

4. Procédé de fabrication du substrat revêtu de la revendication 1 dans lequel les particules de revêtement sont appliquées au substrat dans une quantité comprise entre 0,5 g/m² et 50 g/m².

5. Procédé de fabrication du substrat revêtu de la revendication 1 dans lequel les particules de revêtement sont un élément parmi les agents de renforcement, les émulsifiants, les agents mouillants, les agents électriquement conducteurs, les charges, les ignifugeants, les agents de contrôle de l'écoulement, les agents photosensibles, les agents sensibles à la pression, les durcisseurs, les catalyseurs, les substances inorganiques ou toute combinaison de ceux-ci.

6. Procédé de fabrication d'un substrat revêtu de la revendication 1 dans lequel les particules sont constituées d'un matériau choisi parmi un matériau thermoplastique, un polymère, un caoutchouc, un polyamide, ou des hybrides de ceux-ci ou un composé métallique.

7. Procédé de fabrication du substrat revêtu de la revendication 1 dans lequel la formulation de résine comprend des résines époxy, des bismaléimides, des esters de cyanate, des benzoxazines, des polyesters ou des réactions de ceux-ci.

8. Procédé de fabrication du substrat revêtu de la revendication 1 dans lequel les particules de renforcement sont constituées d'un matériau choisi dans le groupe constitué par le polyimide, le polyamide, la poly(étheréthercétone) (PEEK), la poly(éthercétonecétone) (PEKK), le butadiène-nitrile à terminaison carboxyle (CTBN), le caoutchouc, un matériau à base de poly(oxyde de phénylène) (PPO) émulsionné, les polymères thermoplastiques fonctionnalisés, et un mélange de matériaux thermodurcis et thermoplastiques.

9. Procédé de fabrication d'un substrat revêtu de la revendication 1 dans lequel le film de résine revêtu a un poids dans la gamme de 2 g/^{m2}-100 g/m² et la couche de particules a un poids dans la gamme de 2 g/m²-35 g/m².
